# FASCICULE DE BREVET EUROPEEN

(11) **EP 0 684 144 B1**
(45) Date de publication et mention de la délivrance du brevet: **26.08.1998**
(21) Numéro de dépôt: 95401172.2
(22) Date de dépôt: 19.05.1995
(51) Int. Cl.: B41M 5/24, B41M 5/28, B41M 1/30

(54) **Compositions destinées au marquage coloré des matériaux plastiques par irradiation laser**
Zusammensetzungen zur färbigen Beschriftung von Kunststoffmaterialien durch Laser
Compositions for coloured marking of plastic materials by laser irradiation

(30) Priorité: 25.05.1994 FR 9406338
(43) Date de publication de la demande: 29.11.1995
(73) Titulaire: SODIREP SARL, F-78205 Mantes La Jolie (FR)
(72) Inventeur: Legentil, Bruno, F-95300 Pontoise (FR)
(74) Mandataire: Rinuy, Santarelli

(56) Documents cités:
- EP-A- 0 190 997
- EP-A- 0 327 508
- EP-A- 0 345 032

## Description

La présente invention a pour objet des compositions destinées au marquage coloré des matériaux organiques macromoléculaires thermoplastiques, que l'on désignera "matériaux ou matières plastiques", par irradiation laser, leur procédé de préparation, les mélanges maîtres les contenant et leur application dans le marquage laser des plastiques.

Il est connu de marquer des matériaux organiques macromoléculaires par irradiation laser.

US-A-4 816 376 et EP-A-0 345 032, par exemple, décrivent des compositions permettant d'obtenir un marquage gris ou noir (marquage neutre) par irradiation au laser des matériaux plastiques auxquels elles sont incorporées.

EP-A-0 522 370 décrit des compositions permettant d'obtenir un marquage coloré d'une matière plastique sur fond noir.

FR-A-2 642 362 (EP-A-0 198 771) décrit un procédé pour réaliser des marquages colorés sur des matières plastiques à l'aide d'un feuil renfermant une composante chromogène, que l'on applique sur la surface à marquer, avant de l'irradier au moyen d'un laser, de sorte que la substance chromogène du feuil pénètre dans la couche superficielle de l'objet, aux endroits touchés par le rayonnement.

L'incorporation de certains pigments dans la matière plastique permet d'obtenir un marquage par irradiation au laser, comme il est décrit dans EP-A-0 190 997. Toutefois, les marquages obtenus varient, dans la majeure partie des cas, du gris clair au noir, ces marquages ne sont donc pas colorés. Seuls quelques pigments donnent un légère nuance colorée au marquage.

D'autre part, on remarque dans certains cas une faible résistance à l'usure des marquages obtenus par ces méthodes.

La combinaison de ces mêmes pigments non réactifs au rayonnement laser, décrite dans EP-A-0 327 508, permet d'obtenir un marquage ayant les mêmes caractéristiques que ceux de EP-A-0 190 997, mais sur un fond coloré de teinte différente de celle du marquage.

Toutefois, en raison des inconvénients exposés ci-dessus : coloration faible du marquage, gamme de couleur restreinte, défaut de contraste, le marché est demandeur de moyens permettant d'obtenir un marquage coloré résistant à l'usure, à la teinte désirée, sur des objets de formes quelconques, par irradiation au laser du matériau à marquer.

Afin de résoudre ce problème, la demanderesse a découvert avec étonnement des compositions qui, lorsqu'elles sont introduites dans une matière plastique avant la formation de l'objet moulé ou extrudé souhaité, autorisent sur le produit obtenu son marquage à la couleur désirée par irradiation laser émettant un faisceau de longueur d'onde de longueur d'onde λ comprise dans le domaine visible (0,38 à 0,78 µm) ou le proche infrarouge (de 0,78 µm jusqu'à 2 µm).

Les compositions selon l'invention sont caractérisées par le fait qu'elles contiennent un mélange d'au moins une substance opacifiante et d'au moins une substance chromogène correspondant à la couleur souhaitée.

Par "substance opacifiante", on désigne une substance qui, une fois incorporée dans une matière plastique transparente aux radiations lumineuses diminue et même supprime sa transparence à un rayonnement laser de longueur d'onde spécifiée ci-dessus. Si on les irradie à l'aide d'un faisceau laser, en règle générale, les matières plastiques sont transparentes au rayonnement reçu par elles : le rayonnement est donc sans effet sur elles. C'est le cas de polyoléfines. Les ABS (acrylonitriles-butadiène-styrène) et les polycarbonates quant à eux, ne sont pas totalement transparents aux rayonnements laser, mais l'effet d'un tel traitement sur ces matériaux est un marquage neutre peu intense. Parmi les substances opacifiantes utilisables dans la présente invention, on peut citer :
- des composés mica-oxyde métalliques de la famille des nacres tels que par exemple les mica-oxydes de fer ;
- les particules ultra-fines de dioxyde de titane, d'une structure cristallisée type RUTILE d'un diamètre moyen inférieur à 100 nm, et préférentiellement de particules d'un diamètre moyen compris entre 10 et 50 nm,
- des complexes d'oxydes métalliques à base d'oxyde d'antimoine, tels que les oxydes de titane-nickel-antimoine et titane-chrome-antimoine.

Par "substance chromogène", on désigne des pigments organiques connus utilisables dans la coloration des matières plastiques tels ceux cités dans l'encyclopédie KIRK-OTHMER, 3ème édition, volume 6, page 600 et suivantes.

Les compositions selon l'invention contiennent pondéralement de préférence 50 ± 20 % d'au moins une substance opacifiante telle que définie ci-dessus et 50 ± 20 % d'au moins une substance chromogène.

L'invention a notamment pour objet des compositions caractérisées par le fait que la ou les substances opacifiantes sont choisies dans le groupe constitué par les composés mica-oxyde métallique, notamment de fer de titane ou d'étain, de la famille des nacres et les particules ultra-fines de dioxyde de titane d'un diamètre moyen inférieur à 100 nm, et notamment compris entre 10 et 50 nm, les oxydes de titane-nickel-antimoine et titane-chrome-antimoine.

Des exemples de pigments organiques sont constitués par les familles suivantes : phtalocyanines de cuivre, dioxazines, anthraquinones, pigments monoazoïques et diazoïques, dicétopyrrolopyrrole.

Tous les pigments organiques testés dans les présentes compositions ont donné de bons résultats de marquage coloré.

Selon une variante, les compositions selon l'invention sont caractérisées par le fait qu'elles contiennent, outre un mélange d'une substance opacifiante et d'une substance chromogène, également un colorant noir que l'on choisira par exemple dans le groupe constitué :
- du noir de carbone (pigment black 7, CI 77266)
- du noir de fumée (pigment black 6, CI 77266)
- du noir d'os (pigment black 9, CI 77267)
- du noir d'ivoire (pigment black 9, CI 77267)
la référence entre parenthèses correspond à la définition donnée par le Color Index.

De façon préférentielle, les compositions selon la variante de l'invention contiennent pondéralement 50 ± 10 % de colorant noir, de préférence de noir de carbone, 25 ± 10 % d'au moins une substance opacifiante et 25 ± 10 % d'au moins une substance chromogène.

Les matières plastiques constituant l'objet à marquer sont d'origine synthétique, c'est à dire des matières plastiques qui ont été préparées par polymérisation, par polycondensation ou par polyaddition. Cette dernière catégorie comprend en particulier des polyoléfines, telles que le polyéthylène, le polypropylène, le polybutène ou le polyisobutène, le polystyrène, le poly-(chlorure de vinyle), le poly-(chlorure de vinylidène), des polymères fluorés, tels que les poly-(tétrafluoroéthylène), également des poly(vinyl-acétals), le polyacrylonitrile, des poly-(esters acryliques), des poly(-esters méthacryliques) et le polybutadiène, ainsi que les copolymères de ceux-ci, plus particulièrement l'ABS ou l'EVA. Préférentiellement, on utilise comme matières plastiques à marquer avec une composition selon l'invention des polyoléfines, et notamment les polyéthylènes, les polypropylènes et leurs copolymères.

L'objet en matière plastique peut être non coloré, mais il peut aussi être coloré comme on le souhaite, et pour cela on peut utiliser les matières colorantes appropriées qui sont connues de l'homme du métier.

L'objet en matière plastique peut être coloré par la substance chromogène introduite dans la composition selon l'invention. Dans ce cas, on obtiendra un marquage dans la même teinte que l'objet à marquer, qui se distingue par un très net contraste d'intensité. Il peut également être coloré par une matière colorante d'une teinte différente de celle de la substance chromogène. Dans ce cas, on utilisera une matière colorante ne réagissant pas aux rayonnements lasers en présence d'une substance opacifiante. De telles matières colorantes sont choisies, par exemple, parmi les pigments minéraux pour matières plastiques, tels ceux cités dans l'Encyclopédie Kirk-Othmer, 3ème édition, volume 6, page 600 et suivantes.

Cette technique permet de réaliser des marquages colorés sur une matière plastique de teinte différente comme par exemple, un marquage jaune sur un fond vert ou un marquage bleu sur un fond vert.

Les compositions selon l'invention sont obtenues par simple mélange de leurs constituants, réalisé préférentiellement dans un mélangeur. Mais de manière à éviter les nuisances de tels mélanges et notamment les poussières engendrées lors de leurs manipulations, les compositions selon l'invention sont préférentiellement mélangées avec la matière plastique à laquelle elles sont destinées, de manière à réaliser des "mélanges maîtres" aisément manipulables.

L'invention a également pour objet ces mélanges maîtres caractérisés par le fait qu'ils contiennent une composition selon l'invention en mélange avec la matière plastique à laquelle il sont destinés.

Préférentiellement, ces mélanges maîtres contiennent pondéralement de 5 à 50 % d'une composition selon l'invention et de 95 à 50 % de la matière plastique à laquelle il sont destinés. Ils peuvent également contenir des additifs habituels comme par exemple des cires, telles que les cires de polyéthylène, des acides gras tels que l'acide stéarique, leurs amides, sels ou esters, tels que le stéarate de zinc, le stéarate de calcium, l'éthylène bis-stéramide, des dérivés des acides polycarboxyliques, des esters phosphoriques et des dérivés polyacrylate.

Ces mélanges maîtres peuvent être préparés de manière classique en réalisant dans un premier stade un mélange homogène de leurs divers constituants dans un mélangeur rapide puis, dans un deuxième stade, en extrudant le mélange ainsi obtenu sur un malaxeur à la température requise pour la matière plastique utilisée et enfin, à la sortie de l'extrudeuse, après refroidissement, en découpant en granulés selon le procédé habituel de granulation en tête ou de granulation en joncs.

Les compositions selon l'invention présentent de très intéressantes propriétés lorsqu'elles sont présentes dans un objet fini en matière plastique. En effet, l'objet fini de coloration quelconque peut être aisément marqué à la teinte désirée correspondant à la composition selon l'invention choisie par irradiation avec un faisceau laser de longueur d'onde déterminée. Ces propriétés justifient leur application dans l'industrie de transformation des matières plastiques en vue d'effectuer un marquage coloré par irradiation laser.

Le marquage coloré obtenu par l'utilisation des compositions de l'invention est net et précis. Dans cette application les compositions selon l'invention peuvent être utilisées à des doses extrêmement variables qui peuvent être facilement déterminées en fonction du marquage souhaité par de simple essais, mais préférentiellement on les utilise à une concentration pondérale d'environ 3 ± 1,5 %.

Dans des conditions préférentielles d'utilisation, on dosera la quantité de la composition selon l'invention à introduire dans la matière plastique, de telle sorte que le taux de substance opacifiante dans le produit fini soit de 0,3 ± 0,05 %.

Les compositions selon l'invention sont incorporées dans la matière plastique dont on souhaite pouvoir réaliser un marquage coloré , de manière classique. Avantageusement, on alimente la machine choisie pour réaliser l'objet souhaité telle qu'une presse à injection, une extrudeuse, une malaxeuse, avec la matière plastique de départ sélectionnée, les additifs habituels et soit les constituants de la composition selon l'invention, soit la composition selon l'invention, soit enfin un mélange maître contenant la composition selon l'invention, choisie et à la concentration désirée, de manière à obtenir l'objet en matière plastique désiré, coloré ou non, mais contenant intrinsèquement une composition selon l'invention.

Les matières plastiques, et notamment celles du type polyoléfine, contenant une composition selon l'invention ne sont nullement affectées par cette composition. Elles présentent les mêmes caractéristiques physiques et chimiques que la matière plastique de départ.

Les matières plastiques, et notamment celles du type polyoléfine, brutes ou manufacturées en un objet de forme quelconque, colorées ou non, contenant intrinsèquement une composition de l'invention, peuvent subir un marquage ou une inscription colorée en utilisant des radiations de haute énergie particulières émises notamment par des lasers.

L'invention a également pour objet un procédé de marquage coloré des matières plastiques contenant une composition selon l'invention avec des radiations de haute énergie, caractérisé par le fait que ces radiations ont une longueur d'onde λ comprise dans le domaine du visible (0,38 à 0,78 µm) ou le proche infrarouge (0,78 ≤ λ ≤ 2 µm). Pour la mise en oeuvre du procédé objet de l'invention, les objets ont été irradiés avec un rayonnement laser de longueur d'onde λ = 1,064 µm ou λ = 0,532 µm. Une irradiation à une longueur d'onde λ = 1,064 µm ou une harmonique de cette longueur d'onde donne de bons résultats de marquage.

Des radiations de haute énergie de longueur d'onde de 1,064 µm ou des harmoniques de cette longueur d'onde sont notamment émises par des lasers continuellement excités ou à fonctionnement continu tels que les lasers continus Nd : YAG à multiplicateur de fréquence.

Par "Nd : YAG", on désigne un laser solide à barreau constitué d'Yttrium Alumine Grenat dopé au Néodyme.

Pour la réalisation des exemples un laser Nd :
YAG sont les caractéristiques sont les suivantes a été utilisé.

| | |
|---|---|
| Longueur d'onde : | 1,064 µm |
| Puissance moyenne maximale : | 60 watts |
| Puissance de crête maximale : | 120 Kwatts |
| Durée d'impulsion : | 100 à 400 ns |
| Divergence du faisceau: | 10⁻³ rad |

Ce type de laser émet un faisceau monochromatique de longueur d'onde λ = 1, 064 µm ou des harmoniques de λ.

Les compositions selon l'invention permettent également le marquage des matières plastiques auxquelles elles sont incorporées par irradiation laser à des longueurs d'onde harmoniques de cette longueur d'onde de 1,064 µm, par exemple à une longueur d'onde de 0,532 µm.

Pour le marquage coloré selon le procédé de l'invention, on dirige le faisceau de radiation de haute énergie de longueur d'onde 1,064 µm conformément à la forme de marquage ou de l'inscription à réaliser sur la surface de l'objet à marquer contenant une composition selon l'invention et ce faisceau est éventuellement focalisé : il se forme alors un marquage coloré aux endroits touchés par le rayonnement. Il est préférable que l'appareil de marquage conduise le faisceau laser perpendiculairement à la surface de l'objet à marquer.

Les appareils de marquage à faisceau laser sont conduits par des procédés connus tels que le procédé utilisant un masque, l'inscription linéaire, le procédé à points et matrice.

Dans les deux derniers types d'inscription (conduite dynamique du faisceau), il est avantageux que le laser soit couplé à un système de balayage de telle façon qu'on puisse marquer l'objet avec des chiffres, lettres et signes particuliers quelconques, programmés par exemple dans un ordinateur.

Le balayage par le faisceau peut être réalisé par exemple accousto-optiquement, holographiquement, au moyen de miroirs de galvanomètres ou au moyen d'appareils à balayage polygonal. La conduite dynamique du faisceau permet une inscription (marquage) extrêmement souple car les signes peuvent être créés électroniquement.

Le procédé selon l'invention permet de réaliser des inscriptions et marquages colorés des types les plus variés. On citera par exemple : des codes à barres, des marques d'identité, la numération des pièces, des décorations (logos de sociétés).

Il doit être remarqué que le marquage coloré des matières plastiques contenant une composition selon l'invention ne peut être réalisé que par l'utilisation de longueur d'onde de 1, 064 µm ou d'une longueur d'onde harmonique de 1,064 µm. Notamment, le marquage coloré ne peut pas être effectué par des radiations émises par le laser CO₂.

Selon l'invention, on peut réaliser des marquages sur des objets en matière plastique les plus divers, de forme quelconque, par exemple sur des plaques, tubes, câbles, feuilles, profilés mais préférentiellement, les matières plastiques de départ sont du type polyoléfine et plus particulièrement ce sont du polyéthylène, du polypropylène ou leurs copolymères.

Parmi les applications principales, on citera les inscriptions et marquages sur les câbles électriques, les pneus, les constituants de véhicules, les récipients alimentaires, les appareils ménagers.

Les compositions selon l'invention permettent des combinaisons quelconques de marquages en couleur à contraste coloré qui ne peuvent pas être effacés et qui sont donc solides à l'usure par frottement et au grattage. En outre, les marquages obtenus selon l'invention résistent bien à la corrosion, ils ont une bonne stabilité dimensionnelle, ils ne subissent pas de déformation, ils sont stables à la lumière, à la chaleur et aux agents atmosphériques, ils sont parfaitement lisibles et ils ont des zones marginales propres.

De plus, les propriétés mécaniques et physiques de l'objet ainsi marqué ne sont pratiquement pas altérées : c'est le cas par exemple, pour la résistance mécanique et la résistance chimique. La profondeur de pénétration du marquage dépend de la matière sur laquelle a été effectuée l'inscription. Elle est habituellement inférieure à 100 µm, souvent même inférieure à 20 µm. Il est donc ainsi possible de réaliser des marquages qui sont perceptibles à l'oeil et qui ne portent pas atteinte aux propriétés de solidité d'une pièce d'oeuvre d'épaisseur suffisante.

L'invention a enfin pour objet des matières plastiques à base de polyéthylène, de polypropylène ou d'un de leurs copolymères contenant intrinsèquement une composition de l'invention. Ces matières plastiques à l'état brut ou sous forme d'objets manufacturés présentent en effet la propriété de pouvoir subir un marquage coloré au gré de l'utilisateur.

Les exemples suivants illustrent l'invention.

Dans ces exemples les pourcentages indiqués sont pondéraux.

### EXEMPLES :

### Tests de résistance à l'usure

Tous les échantillons obtenus dans les exemples ont subi des tests de résistance :
- grattage : par grattage manuel à l'ongle de la zone marquée
- frottement : application du test ci-dessous.

### Test de frottement

Il est réalisé à l'aide d'un appareil Crockmeter comportant une touche cylindrique de 16 mm de diamètre soumise à une charge de 900 grammes. Cette touche effectue des mouvements de va-et-vient d'amplitude 100 mm, à la vitesse de 1 cycle par seconde.

On fixe un carré de tissu en coton, à armure toile sans encollage ni apprêt, d'une masse surfacique de 125 g/m² sur l'appareil et on effectue 10 mouvements de va-et-vient sur l'échantillon à tester.

On observe les dégradations provoquées par ce traitement sur l'échantillon.

Le même essai est effectué avec des tissus identiques imprégnés :
- d'eau
- d'eau savonneuse (0,5 % de savon de Marseille et 0,5 % de carbonate de sodium)
- d'alcool éthylique à 95 %
- d'heptane.

### EXEMPLE 1 : Inscription verte sur plaquette vert foncé obtenue par coloration dans la masse.

### a) Fabrication des plaquettes.

La composition selon l'invention est obtenue en mélangeant manuellement dans un bocal 1 g de vert de phtalocyanine de cuivre, 0,6 g de mica-oxyde de fer noir et 100 g de polyéthylène de haute densité de grade 7.

Ce mélange est extrudé à 150°C sur extrudeuse monovis de diamètre D = 30 mm et de longueur 28 D, sous forme de joncs qui seront ensuite coupés en granulés.

Ce composé coloré est injecté sur une presse de 45 t de pression de fermeture. Les températures d'injection sont comprises entre 220 et 250°C. On obtient ainsi des plaquettes colorées en vert foncé de dimensions 60x50x2 mm.

### b) Marquage au laser.

On a utilisé un laser Nd : YAG dont les caractéristiques ont été précédemment décrites. Lors de l'essai de marquage la fréquence était de 1500 Hertz, l'ampérage de 11 A et la vitesse de balayage de 100 mm/s.

On a inscrit des caractères de différentes grandeurs et finesses. Le marquage ressort en vert clair sur les plaquettes vert foncé avec une excellente définition des caractères. Le contour des lettres est parfaitement clair, sans bavure. Le marquage est résistant au grattage et au frottement.

### EXEMPLE 2 : Inscription verte sur plaquettes noires obtenue à partir d'un mélange maître.

### a) Fabrication des plaquettes.

La composition du mélange maître est la suivante :
- 5 % vert de phtalocyanine de cuivre
- 10 % noir de carbone
- 10 % cire polyéthylène
- 65 % polyéthylène basse densité radicalaire de grade 20.
- 10 % de mica-oxyde de fer noir.

Le mélange maître est élaboré selon le procédé décrit précédemment.

Les granulés de mélanges maîtres sont dosés à 5 % dans du polyéthylène haute densité de grade 7.

Les plaquettes sont réalisées de la même façon que dans l'exemple 1.

### b) Marquage au laser

On a réalisé des inscriptions plus complexes et délicates telles que des codes à barre et des logos de sociétés.

Les résultats sont surprenants tant pour la qualité du contraste (vert clair sur noir) que pour la définition des traits. On a testé la relecture des codes à barres et obtenu un résultat parfait.

Le caractère permanent du marquage a été testé par grattage manuel et par frottement.

### EXEMPLES 3, 4, 5 et 6

On a réalisé les mêmes essais que dans l'exemple 2 en changeant les types de pigments. Les pigments utilisés sont respectivement :
- bleu de phtalocyanine de cuivre,
- rouge DPP (dicétopyrrolopyrrole),
- jaune de benzimidazolone,
- violet de dioxazine,
- orange azoïque.

Les résultats des marquages sont très bons. Les couleurs sont franches et les contrastes avec le fond noir très bien définis. Les résistances au grattage et au frottement sont très bonnes.

### EXEMPLE 7

On a réalisé les mêmes essais que dans l'exemple 1 en remplaçant le pigment mica-oxyde de fer noir par de fines particules de titane (nanotitane) d'un diamètre moyen de 18 nm. On a obtenu exactement les mêmes qualités de marquage que dans les autres exemples, tant en ce qui concerne le contraste des couleurs que la définition des contours des symboles et caractères et le caractère permanent du marquage (résistance au grattage et au frottement).

### EXEMPLES 8, 9 et 10 (comparatifs)

Les exemples 1, 2 et 7 ont été reproduits dans les conditions décrites ci-dessus, mais en l'absence de substance opcifiante (pigment). Les matières plastiques ainsi obtenues ont été traitées par un rayonnement laser conformément aux essais précédents. Le marquage obtenu est un marquage neutre (sans coloration, de gris clair à gris foncé).

### EXEMPLE 11 Marquage bleu sur fond vert

On reproduit les mêmes essais que dans l'exemple 1 à partir de :
- 100 g de polyéthylène haute densité
- 0,3 g de mica-oxyde d'étain
- 0,3 g de bleu de phtalocyanine
- 0,8 g de jaune de chrome

On obtient un marquage bleu sur fond vert, bien contrasté, aux contours bien définis, résistant au grattage et au frottement.

### EXEMPLE 12 Marquage jaune sur fond vert

On procède comme à l'exemple 11 au départ de :
- 100 g de e polyéthylène haute densité
- 0,3 g de mica-oxyde d'étain
- 0,3 g de jaune organique
- 0,8 g de bleu outremer

On obtient, avec un bon contraste et une bonne résolution, un marquage jaune sur fond vert, résistant au grattage et au frottement.

### EXEMPLE 13 (comparatif)

On a préparé deux plaquettes à marquer conformément à l'exemple 2 à partir de :

| | A | B |
|---|---|---|
| Polyéthylène haute densité | 100 g | 100 g |
| Noir de carbone | 0,8 g | 0,8 g |
| Jaune organique | 0,2 g | 0,2 g |
| Mica-oxyde d'étain | 0,3 g | - |

Les plaquettes subissent un marquage au laser conformément à l'exemple 1.

La composition A donne un marquage bien contrasté, de couleur vive, résistant au frottement et au grattage.

La composition B donne un marquage faiblement coloré, peu résistant au frottement comme au grattage.

## Revendications

1. Compositions destinées au marquage coloré de matières plastiques caractérisées par le fait qu'elles contiennent un mélange d'au moins une substance opacifiante et d'au moins une substance chromogène correspondant à la couleur souhaitée, et par le fait que la ou les substances opacifiantes utilisées sont choisies dans le groupe constitué par :
- les mica-oxydes métalliques de la famille des nacres
- les particules ultra-fines de dioxyde de titane d'un diamètre moyen inférieur à 100 nm,
- les complexes d'oxydes métalliques à base d'oxyde d'antimoine.

2. Compositions selon la revendication 1, caractérisées par le fait que la ou les substances opacifiantes sont choisies parmi : les composés mica-oxyde de fer, mica-oxyde de titane, mica-oxyde d'étain, de la famille des nacres et les particules ultra fines de dioxyde de titane d'un diamètre moyen compris entre 10 et 50 nm, les oxydes de titane-nickel-antimoine et titane-chrome-antimoine.

3. Compositions selon l'une quelconque des revendications 1 et 2, caractérisées par le fait que la substance chromogène est un pigment organique.

4. Compositions selon la revendication 3, caractérisées par le fait que le pigment organique utilisé est choisi dans le groupe constitué par les pigments organiques suivants : phtalocyanines de cuivre, dioxazines, anthraquinone, pigments monoazoïques et diazoïques, dicétopyrrolopyrrole.

5. Compositions selon l'une quelconque des revendications 1 à 4, caractérisées en ce qu'elles contiennent pondéralement 50 ± 20 % d'au moins une substance opacifiante et 50 ± 20 % d'au moins une substance chromogène.

6. Compositions selon l'une des revendications 1 à 5, caractérisées en ce qu'elles contiennent, outre une substance opacifiante et une substance chromogène, un colorant noir.

7. Compositions selon la revendication 6, caractérisées en ce qu'elles contiennent pondéralement 50 ± 10 % de colorant noir, 25 ± 10 % d'au moins une substance opacifiante et 25 ± 10 % d'au moins une substance chromogène.

8. Compositions selon l'une des revendications 1 à 5, caractérisées en ce qu'elles contiennent, outre une substance opacifiante et une substance chromogène, une matière colorante ne réagissant pas par irradiation au laser en présence d'une substance opacifiante.

9. Compositions selon la revendication 8, caractérisées en ce que la matière colorante ne réagissant pas par irradiation au laser est un pigment minéral.

10. Mélanges maîtres constitués de :
- 50 à 95 % de matériau polymère thermoplastique, et
- 5 à 50 % d'une composition selon l'une des revendication 1 à 9.

11. Matières plastiques susceptibles d'être soumises à un marquage coloré au moyen d'une irradiation laser, caractérisées par le fait qu'elles contiennent une composition selon l'une quelconque des revendications 1 à 9, à une concentration pondérale de 3 ± 1,5 %.

12. Matières plastiques selon la revendication 11, caractérisées en ce qu'elles contiennent 0,3 ± 0,05 % de substance opacifiante.

13. Mélanges maîtres ou matières plastiques selon l'une des revendications 11 à 12, caractérisées en ce que le matériau polymère thermoplastique est une polyoléfine.

14. Mélanges maîtres ou matières plastiques selon la revendication 13, caractérisés en ce que le matériau polymère thermoplastique est choisi dans le groupe constitué par le polyéthylène, le polypropylène et leurs copolymères.

15. Procédé de marquage coloré d'un objet en matière plastique, réalisé à partir d'un mélange maître ou d'une matière plastique selon l'une des revendications 12 à 14, consistant à irradier l'objet à marquer avec un laser émettant une irradiation monochromatique de haute énergie de longueur d'onde λ comprise dans le domaine visible (0,38 µm à 0,78 µm) ou dans le proche infrarouge (0,78 ≤ λ ≤ 2 µm).

16. Procédé selon la revendication 15, caractérisé en ce que la longueur d'onde d'irradiation est λ = 1,064 µm ou une longueur d'onde harmonique.

17. Utilisation d'une composition selon l'une des revendications 1 à 9 pour réaliser, par irradiation au laser, le marquage coloré d'une matière plastique.

18. Objets en matière plastique marqués par le procédé selon la revendication 15 ou 16.

## Claims

1. Compositions intended for coloured marking of plastics, characterized in that they contain a mixture of at least one opacifier and at least one chromogenic substance corresponding to the colour desired and in that the opacifying substance or substances used is or are chosen from the group consisting of:
- the metallic mica-oxides of the nacre family
- ultra-fine particles of titanium dioxide having a mean diameter of less than 100 nm
- metallic oxide complexes based on antimony oxide.

2. Compositions in accordance with claim 1, characterized in that the opacifying substance or substances used is or are chosen from the group consisting of: the mica-oxide compounds of iron, titanium, or tin of the nacre family, ultra-fine particles of titanium dioxide having a mean diameter of between 10 and 50 nm, and the oxides of titanium-nickel-antimony and titanium-chromium-antimony.

3. Compositions in accordance with either claim 1 or claim 2, characterized in that the chromogenic substance is an organic pigment.

4. Compositions in accordance with claim 3, characterized in that the organic pigment used is selected from the group consisting of the following organic pigments: copper phthalocyanins, dioxazines, anthraquinone, monoazo and diazo pigments, diketopyrrolopyrrole.

5. Compositions in accordance with any one of claims 1 to 4, characterized in that they contain 50 ± 20% by weight of at least one opacifier and 50 ± 20% by weight of at least one chromogenic substance.

6. Compositions in accordance with any one of claims 1 to 5, characterized in that they contain, in addition to an opacifier and a chromogenic substance, a black colorant.

7. Compositions in accordance with claim 6, characterized in that they contain 50 ± 10% by weight of a black colorant 25 ± 10% by weight of at least one opacifier and 25 ± 10% by weight of at least one chromogenic substance.

8. Compositions in accordance with any one of claims 1 to 5, characterized in that they contain, in addition to an opacifier and a chromogenic substance, a colorant material which does not react to laser irradiation in the presence of an opacifier.

9. Compositions in accordance with claim 8, characterized in that the colorant material which does not react to laser irradiation is a mineral pigment.

10. Master batches consisting of:
- 50 to 95% of thermoplastic polymer material and
- 5 to 95% of a composition in accordance with any one of claims 1 to 9.

11. Plastics which can be subjected to coloured marking by means of laser irradiation, characterized in that they contain a composition in accordance with any one of claims 1 to 9 at a concentration of 3 ± 1.5% by weight.

12. Plastics in accordance with claim 11, characterized in that they contain 0.3 ± 0.05% by weight of opacifier.

13. Master batches or plastics in accordance with either one of claims 11 or 12, characterized in that the thermoplastic polymer material is a polyolefin.

14. Master batches or plastics in accordance with claim 13, characterized in that the thermoplastic polymer material is chosen from the group consisting of polyethylene, polypropylene and their copolymers.

15. A process for coloured marking of an object made of plastic formed from a master batch or a plastic in accordance with any one of claims 12 to 14 which consists of irradiating the object to be marked with a laser emitting a high energy monochromatic radiation with a wavelength λ within the visible range (0.38 µm to 0.78 µm) or in the near infrared (0.78 ≤ λ ≤ 2 µm).

16. A process in accordance with claim 15, characterized in that the irradiation wavelength is λ = 1.064 µm or a harmonic wavelength.

17. Use of a composition in accordance with any one of claims 1 to 9 to produce, by laser radiation, coloured marking of a plastic material.

18. Objects made of plastic marked by the process according to claim 15 or 16.

## Patentansprüche

1. Zusammensetzungen für die farbige Markierung von Kunststoffmaterialien, dadurch gekennzeichnet, daß sie eine Mischung mindestens eines Trübungsmittels und mindestens einer der gewünschten Farbe entsprechenden chromogenen Substanz enthalten, und daß das oder die verwendeten Trübungsmittel ausgewählt sind aus der Gruppe, bestehend aus:
- den Metallglimmeroxiden der Perlmuttklasse,
- den ultrafeinen Partikeln von Titandioxid mit einem mittleren Durchmesser unterhalb von 100 nm,
- den komplexen Metalloxiden auf Antimonoxidbasis.

2. Zusammensetzungen nach Anspruch 1, dadurch gekennzeichnet daß das oder die Trübungsmittel ausgewählt sind aus: Den zusammengesetzten Eisenglimmeroxiden, Titanglimmeroxiden, Zinnglimmeroxiden der Perlmuttklasse und den ultrafeinen Partikeln von Titandioxid mit einem mittleren Durchmesser von 10 bis 50 nm, den Titan-Nickel-Antimon- und Titan-Chrom-Antimonoxiden.

3. Zusammensetzungen nach irgendeinem der Ansprüche 1 und 2, dadurch gekennzeichnet, daß die chromogene Substanz ein organisches Pigment ist.

4. Zusammensetzungen nach Anspruch 3, dadurch gekennzeichnet, daß das verwendete organische Pigment ausgewählt ist aus der Gruppe, bestehend aus den nachfolgenden organischen Pigmenten: Kupferphthalocyanine, Dioxazine, Anthrachinon, Monoazo- und Diazopigmente, Diketonpyrrolopyrrol.

5. Zusammensetzungen nach irgendeinem der Ansprüche 1 bis 4, dadurch gekennzeichnet, daß sie 50 ± 20 Gew.-% mindestens eines Trübungsmittels und 50 ± 20 Gew.-% mindestens einer chromogenen Substanz enthalten.

6. Zusammensetzungen nach einem der Ansprüche 1 bis 5, dadurch gekennzeichnet, daß sie außer einem Trübungsmittel und einer chromogenen Substanz einen schwarzen Farbstoff enthalten.

7. Zusammensetzungen nach Anspruch 6, dadurch gekennzeichnet, daß sie 50 ± 10 Gew.-% schwarzen Farbstoff, 25 ± 10 Gew.-% mindestens eines Trübungsmittels und 25 ± 10 Gew.-% mindestens einer chromogenen Substanz enthalten.

8. Zusammensetzungen nach einem der Ansprüche 1 bis 5, dadurch gekennzeichnet, daß sie außer einem Trübungsmittel und einer chromogenen Substanz eine färbende Substanz enthalten, die bei Bestrahlung mit Laser in Gegenwart eines Trübungsmittels nicht reagiert.

9. Zusammensetzungen nach Anspruch 8, dadurch gekennzeichnet, daß die nicht unter Laserbestrahlung reagierende färbende Substanz ein mineralisches Pigment ist.

10. Grundmischungen bestehend aus:
- 50 bis 95 % thermoplastischem Polymermaterial und
- 5 bis 50 % einer Zusammensetzung nach einem der Ansprüche 1 bis 9.

11. Kunststoffmaterialien, geeignet für eine farbigen Markierung mittels einer Laserbestrahlung, dadurch gekennzeichnet, daß sie eine Zusammensetzung nach irgendeinem der Ansprüche 1 bis 9 mit einer Konzentration von 3 ± 1,5 Gew.-% enthalten.

12. Kunststoffmaterialien nach Anspruch 11, dadurch gekennzeichnet, daß sie 0,3 ± 0,05 % des Trübungsmittels enthalten.

13. Grundmischungen oder Kunststoffmaterialien nach einem der Ansprüche 11 und 12, dadurch gekennzeichnet, daß das thermoplastische Polymermaterial ein Polyolefin ist.

14. Grundmischungen oder Kunststoffmaterialien nach Anspruch 13, dadurch gekennzeichnet, daß das thermoplastische Polymermaterial ausgewählt ist aus der Gruppe, bestehend aus Polyethylen, Polypropylen und ihren Copolymeren.

15. Verfahren zur farbigen Markierung eines aus einer Grundmischung oder einem Kunststoffmaterial nach einem der Ansprüche 12 bis 14 erzeugten Kunststoffgegenstands, bestehend aus: Bestrahlen des zu markierenden Gegenstands mit einem Laser, der eine monochromatische Strahlung hoher Energie mit einer Wellenlänge λ im sichtbaren Bereich (0,38 µm bis 0,78 µm) oder im nähen Infrarot (0,78 ≤ λ ≤ 2 µm) emittiert.

16. Verfahren nach Anspruch 15, dadurch gekennzeichnet, daß die Bestrahlungswellenlänge λ = 1,064 µm oder eine harmonische Wellenlänge ist.

17. Verwendung einer Zusammensetzung nach einem der Ansprüche 1 bis 9 für die farbige Markierung eines Kunststoffmaterials mit Laserbestrahlung.

18. Gegenstände aus Kunststoffmaterial, markiert durch das Verfahren nach Anspruch 15 oder 16.
